# EUROPEAN PATENT APPLICATION

(11) **EP 4 467 522 A1**
(43) Date of publication of application: **27.11.2024**
(21) Application number: 23766116.0
(22) Date of filing: 10.03.2023
(51) Int. Cl.: C03C 17/30, C03C 17/00, C03C 27/10, B60R 1/10, B60R 1/08, B60J 1/10

(54) **HYDROPHOBIC ANTI-REFLECTIVE GLASS FOR VEHICLE, FABRICATION METHOD THEREFOR, AND LAMINATED GLASS**

(30) Priority: 10.03.2022 CN 202210236924
(71) Applicant: Fuyao Glass Industry Group Co., Ltd., Fuqing, Fujian 350300 (CN)
(72) Inventor: SUN, Yingying, Fuqing, Fujian 350300 (CN); GUO, Shanji, Fuqing, Fujian 350300 (CN); WEI, Dingqiang, Fuqing, Fujian 350300 (CN); ZHANG, Canzhong, Fuqing, Fujian 350300 (CN); KE, Cheng, Fuqing, Fujian 350300 (CN)
(74) Representative: Patentanwälte Olbricht Buchhold Keulertz
(86) International application number: PCT/CN2023/080656
(87) International publication number: WO 2023/169539

(57) **Abstract**

Provided are a hydrophobic anti-reflective glass for a vehicle, a fabrication method therefor, and a laminated glass. The hydrophobic anti-reflective glass comprises a first glass plate and a hydrophobic anti-reflective coating coated on side surfaces of the glass plate, the hydrophobic anti-reflective coating is a single-layered structure formed by curing a hydrophobic anti-reflective coating, and raw materials of hydrophobic anti-reflective coating comprise silicate, phenylsilane and a fluorine-containing surfactant; and the refractive index of the hydrophobic anti-reflective coating is 1.20-1.30. The hydrophobic anti-reflective glass has both hydrophobicity and an anti-reflective performance.

## Description

The present application claims the right of priority for Chinese patent application no. 202210236924.6, filed with the China National Intellectual Property Administration on March 10, 2022 and entitled "HYDROPHOBIC ANTI-REFLECTIVE GLASS FOR VEHICLE, FABRICATION METHOD THEREFOR, AND LAMINATED GLASS", which is incorporated herein by reference in its entirety.

### Technical Field

The present invention relates to the technical field of glass fabrication, and in particular relates to a hydrophobic anti-reflective glass for a vehicle, a fabrication method therefor, and a laminated glass.

### Background Art

With the progress of science and technology, new requirements have been put forward for the comfortability and functionality of automotive glass products, not just limited to safety and wind shielding functions. In recent years, automotive glass products with functionality, comfortability and aesthetic functions have emerged one after another, such as heat-insulating and UV-blocking glass, hydrophobic glass, solar glass, anti-fog glass, head-up display (HUD) glass, and tinted glass. Hydrophobic glass has been widely used in the field of automotive glass since it can effectively make water droplets thereon roll away and guarantee a good view of drivers on rainy days. Anti-reflective coating layers have been applied in the field of optics and display glass in shopping malls, museums, etc., for many years due to their ability to effectively reduce light reflection. Later, it was found that anti-reflective glass can efficiently reduce the interior reflection of automotive glass at night and alleviate visual interference and fatigue of drivers; therefore, same has also received increasing attention in the field of automotive glass.

In the prior art, patents CN 110776826 A, CN 109321131 A, CN 112094586 A, CN 111978861 A, CN 111925525 A, CN 112080716 A, CN 111892846 A, CN 107902918 B, CN 108027453 A, CN 108017290 A and CN 108025962 A have disclosed hydrophobic coating layers or anti-reflective glass techniques; however, in most of the patents, a hydrophobic function and an anti-reflection function are separate; and in CN 108025962 A and CN 108312655 A, the hydrophobicity of a coating layer is improved by additionally providing an anti-fingerprint coating layer on an anti-reflective coating layer. No techniques can be used to manufacture glass with both hydrophobic and anti-reflection functions in a single step.

### Summary of the Invention

In order to solve the above problems, the objectives of the present invention are to provide a hydrophobic anti-reflective glass for a vehicle, a fabrication method therefor, and a laminated glass. In the present invention, by spraying a single hydrophobic anti-reflective coating layer onto the surface of glass, the glass can have both hydrophobicity and anti-reflection properties.

In order to achieve the above objective, the present invention provides a hydrophobic anti-reflective glass for a vehicle comprising a first glass plate and a hydrophobic anti-reflective coating layer, wherein the hydrophobic anti-reflective coating layer is coated onto the surface of one side of the first glass plate; the hydrophobic anti-reflective coating layer is a single-layered structure formed by curing a hydrophobic anti-reflective coating material, the raw materials of which comprise a silicate ester, a phenylsilane and a fluorine-containing surfactant; and the hydrophobic anti-reflective coating layer has a water contact angle of 110°-130° and a refractive index of 1.20-1.30.

In some specific embodiments, a curved glass plate may be selected as the first glass plate, and in this case, the first glass plate may be referred to as the first curved glass plate.

In some specific embodiments, the first curved glass plate generally has a first concave surface and a first convex surface, and the hydrophobic anti-reflective layer is generally coated onto the first convex surface or the first concave surface.

In some specific embodiments, the hydrophobic anti-reflective coating layer preferably has a thickness of 10 nm-300 nm, for example, 50 nm-250 nm.

In some specific embodiments, the water contact angle of the hydrophobic anti-reflective coating layer is preferably greater than or equal to 120°.

In some specific embodiments, the refractive index of the hydrophobic anti-reflective coating layer is preferably 1.21-1.25.

In some specific embodiments, the porosity of the hydrophobic anti-reflective coating layer can be greater than or equal to 40%.

In some specific embodiments, the refractive index of the hydrophobic anti-reflective coating layer is 1.23-1.28.

In some specific embodiments, a flat abrasion test at 100 revolutions according to 2.45 N × 100 r is performed using a flat abrasion tester on the hydrophobic anti-reflective glass for a vehicle with the hydrophobic anti-reflective coating layer thereof upwards, the contact angle after the abrasion is measured to be greater than or equal to 100°.

In some specific embodiments, the hydrophobic anti-reflective coating material can be obtained by mixing a first solution with a second solution, wherein with the total mass of the raw materials of the hydrophobic anti-reflective coating material being 100%, the first solution generally comprises 3%-20% of a silicate ester, 2%-10% of a phenylsilane, 0.01%-0.5% of a fluorine-containing surfactant, and a first organic solvent; and the second solution comprises 0.5-5% of a catalyst, and a second organic solvent.

In some specific embodiments, the sum of the mass percentages of the first organic solvent and the second organic solvent in the raw materials of the hydrophobic anti-reflective coating material is 65%-90%.

In some specific embodiments, the sum of the mass percentages of the fluorine-containing surfactant and the phenylsilane in the raw materials of the hydrophobic anti-reflective coating material is generally controlled to be 3%-9%.

In some specific embodiments, the sum of the mass percentages of the silicate ester and the phenylsilane in the raw materials of the hydrophobic anti-reflective coating material is generally controlled to be 5%-15%.

In some specific embodiments, the silicate ester can comprise one of or a combination of two or more of methyl orthosilicate, ethyl orthosilicate, propyl orthosilicate, and butyl orthosilicate.

In some specific embodiments, the phenylsilane comprises one of or a combination of two or more of phenyltrimethoxysilane, phenyltriethoxysilane, methylphenyldimethoxysilane, diphenyldimethoxysilane, and methylphenyldiethoxysilane.

In some specific embodiments, the fluorine-containing surfactant comprises a nonionic fluorocarbon surfactant.

In some specific embodiments, the solid content of the nonionic fluorocarbon surfactant may be greater than or equal to 50%.

In some specific embodiments, the fluorine-containing surfactant comprises a perfluorooctyl polyether surfactant.

In some specific embodiments, the water solubility of the perfluorooctyl polyether surfactant may be greater than or equal to 90%.

In some specific embodiments, the first organic solvent and/or the second organic solvent comprise one of or a combination of two or more of methanol, ethanol, propanol, butanol and isopropanol.

In some specific embodiments, the catalyst comprises an alkaline catalyst or an acidic catalyst, wherein the alkaline catalyst may comprise one of or a combination of two or more of sodium hydroxide, potassium hydroxide, aqueous ammonia and sodium bicarbonate, and the acidic catalyst may comprise one of or a combination of two or more of hydrochloric acid, nitric acid and acetic acid.

The present invention further provides a fabrication method for the above hydrophobic anti-reflective glass for a vehicle, the fabrication method comprising the steps of
with the total mass of the raw materials of a hydrophobic anti-reflective coating material being 100%, mixing and stirring 3%-20% of a silicate ester, 2%-10% of a phenylsilane, 0.01%-0.5% of a fluorine-containing surfactant and a first organic solvent to obtain a first solution, and mixing and stirring 0.5%-5% of a catalyst and a second organic solvent to obtain a second solution; mixing and stirring the second solution and the first solution to obtain the hydrophobic anti-reflective coating material; and applying the hydrophobic anti-reflective coating material onto the surface of one side of a first glass plate and curing same to form a hydrophobic anti-reflective coating layer on the surface, so as to obtain the hydrophobic anti-reflective glass for a vehicle.

In some specific embodiments, the above fabrication method comprises: with the total mass of the raw materials of a hydrophobic anti-reflective coating material being 100%, mixing and stirring 3%-20% of a silicate ester, 2%-10% of a phenylsilane, 0.01%-0.5% of a fluorine-containing surfactant and a first organic solvent to obtain a first solution, and mixing and stirring 0.5%-5% of a catalyst and a second organic solvent to obtain a second solution, the sum of the mass percentage of the first organic solvent in the raw materials of the hydrophobic anti-reflective coating material and the mass percentage of the second organic solvent in the raw materials of the hydrophobic anti-reflective coating material being 65%-90%; mixing and stirring the second solution and the first solution to obtain the hydrophobic anti-reflective coating material; and applying the hydrophobic anti-reflective coating material onto the surface of one side of a first glass plate and curing same to form a hydrophobic anti-reflective coating layer on the surface, so as to obtain the hydrophobic anti-reflective glass for a vehicle.

In some specific embodiments, when the first glass plate is the first curved glass plate, the hydrophobic anti-reflective coating material is generally applied onto the first convex surface or the first concave surface of the first curved glass plate and then cured to form a hydrophobic anti-reflective layer on the first convex surface or the first concave surface.

In some specific embodiments, the mixing and stirring the second solution and the first solution comprises: dropwise adding the second solution to the first solution under stirring, with the addition speed generally being controlled to be 30-120 drops/min, preferably 50-80 drops/min.

In some specific embodiments, the process for the coating comprises ultrasonic spraying.

In some specific embodiments, during the ultrasonic spraying, the ultrasonic frequency is 50 kHz-120 kHz, the liquid discharging amount during the spraying is 0.5 mL/min-10 mL/min, and the moving speed during the spraying is 300 mm/s-800 mm/s.

In some specific embodiments, the curing may comprise first curing at a temperature of 50°C-100°C and second curing at a temperature of 150°C-200°C in sequence.

In some specific embodiments, the first curing can be performed by using an infrared lamp.

In some specific embodiments, the time for the first curing may be controlled to be 10 min-50 min.

In some specific embodiments, the second curing can be performed by using an air blast drying oven.

In some specific embodiments, the time for the second curing may be controlled to be 30 min-120 min.

The present invention further provides a hydrophobic anti-reflective laminated glass for a vehicle. The laminated glass comprises the hydrophobic anti-reflective glass for a vehicle mentioned above, a second glass plate and a thermoplastic intermediate layer, wherein the thermoplastic intermediate layer is provided between the first glass plate of the hydrophobic anti-reflective glass for a vehicle and the second glass plate, the hydrophobic anti-reflective laminated glass for a vehicle has an outer surface and an inner surface, and the hydrophobic anti-reflective coating layer is provided on the outer surface or inner surface of the laminated glass.

In some specific embodiments, the hydrophobic anti-reflective coating layer is generally provided on the surface of one side of the first glass plate away from the thermoplastic intermediate layer.

In some specific embodiments, when the above laminated glass is installed on a vehicle, the first glass plate may be on the outer side of the vehicle, and the second glass plate may be on the inner side of the vehicle; and alternatively, the second glass plate may be on the outer side of the vehicle, and the first glass plate may be on the inner side of the vehicle.

In some specific embodiments, when the first glass plate is the first curved glass plate, the first convex surface of the first curved glass plate is the outer surface of the laminated glass, or the first concave surface of the first curved glass plate is the inner surface of the laminated glass.

The beneficial effects of the present invention are as follows:
1. In the present invention, by adding a phenylsilane and a fluorine-containing surfactant to the hydrophobic anti-reflective coating layer and utilizing the synergistic effect therebetween, the glass can have both hydrophobicity and anti-reflection functions, thus the resulting hydrophobic anti-reflective glass with a single hydrophobic anti-reflective coating layer can have a refractive index that is effectively reduced to 1.20-1.30 and a good anti-reflection effect while having a water contact angle of 110°-130° and good hydrophobicity.
2. Compared with two or even more coating layers individually having a hydrophobic effect or an anti-reflection effect, in the fabrication method for the hydrophobic anti-reflective glass for a vehicle according to the present invention, process conditions and techniques that are simple and easy to operate are used. The fabrication method is suitable for single-sided or double-sided spraying of various curved automotive glass and can be used for fabricating a hydrophobic anti-reflective laminated glass for a vehicle, showing good application prospects in the field of glass for vehicles.

### Brief Description of the Drawings

Fig. 1 shows a schematic structural diagram of a hydrophobic anti-reflective glass for a vehicle according to the present invention.
Fig. 2 shows a schematic structural diagram of a hydrophobic anti-reflective laminated glass for a vehicle according to the present invention.
Fig. 3 shows a schematic structural diagram of another hydrophobic anti-reflective laminated glass for a vehicle according to the present invention.

Description of reference signs of main components:
first curved glass plate 1, hydrophobic anti-reflective coating layer 2, hydrophobic anti-reflective glass 10 for vehicle, second curved glass plate 30, thermoplastic intermediate layer 20, first convex surface 11 of first curved glass plate, first concave surface 12 of first curved glass plate, outer surface 51 of laminated glass, inner surface 52 of laminated glass.

### Detailed Description of Embodiments

In order to understand the technical features, object and beneficial effects of the present invention more clearly, then the technical solution of the present invention is described in detail as below, but it cannot be construed as a limitation for the implementable scope of the present invention.

The present invention provides a hydrophobic anti-reflective glass for a vehicle comprising a first glass plate and a hydrophobic anti-reflective coating layer, wherein the hydrophobic anti-reflective coating layer is applied on the surface of one side of the first glass plate; the hydrophobic anti-reflective coating layer is a single-layered structure formed by curing a hydrophobic anti-reflective coating material, the raw materials of which comprise a silicate ester, a phenylsilane and a fluorine-containing surfactant; and the hydrophobic anti-reflective coating layer has a water contact angle of 110°-130° and a refractive index of 1.20-1.30.

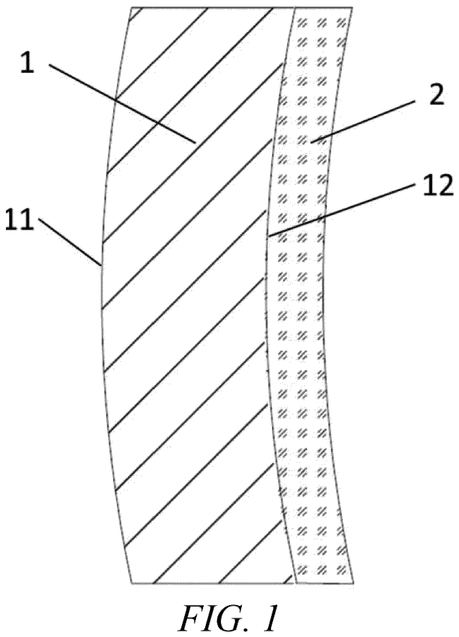

As shown in Fig. 1, the hydrophobic anti-reflective glass for a vehicle of the present invention specifically comprises a first curved glass plate 1 and a hydrophobic anti-reflective coating layer 2; the first curved glass plate 1 has a first convex surface 11 and a first concave surface 12, and the hydrophobic anti-reflective coating layer 2 is coated onto the first convex surface 11 or the first concave surface 12; the hydrophobic anti-reflective coating layer 2 is a single-layered structure formed by curing a hydrophobic anti-reflective coating material, the raw materials of which comprise a silicate ester, a phenylsilane and a fluorine-containing surfactant; and the hydrophobic anti-reflective coating layer 2 has a water contact angle of 110°-130° and a refractive index of 1.20-1.30 (e.g., 1.21, 1.22, 1.23, 1.24, 1.25, 1.26, 1.27, 1.28, and 1.29).

In the present invention, a single hydrophobic anti-reflective coating layer is coated onto the surface of one side of a first glass plate (for example, the first curved glass plate), and a hydrophobic anti-reflective glass with both hydrophobicity and a low refractive index can be obtained by simply combining the coating layer having a single layer structure and the glass plate. Moreover, in the prior art, it is difficult to control the refractive index of a single coating layer at 1.25 or less, and a plurality of coating layers are usually required to achieve hydrophobicity and a lower refractive index at the same time. However, in some specific embodiments of the present invention, the single hydrophobic anti-reflective coating layer has not only good hydrophobicity but also a better refractive index that may reach 1.21-1.25, specifically may reach 1.21, 1.22, 1.23, 1.24, 1.25, etc., which is close to the refractive index (1.23) of an ideal anti-reflective film.

In some specific embodiments, the hydrophobic anti-reflective coating layer 2 preferably has a thickness of 10 nm-300 nm. For example, the thickness is controlled to be 50 nm-250 nm, more preferably 80 nm-200 nm.

In some specific embodiments, the water contact angle of the hydrophobic anti-reflective coating layer 2 is preferably greater than or equal to 120°.

In some specific embodiments, the refractive index of the hydrophobic anti-reflective coating layer is 1.23-1.28.

In some specific embodiments, a flat abrasion test at 100 revolutions according to 2.45 N × 100 r is performed using a flat abrasion tester on the hydrophobic anti-reflective glass for a vehicle with the hydrophobic anti-reflective coating layer 2 thereof upwards, the contact angle after the abrasion is measured to be greater than or equal to 100°. Further, the contact angle after the abrasion may be greater than or equal to 104°, greater than or equal to 105°, greater than or equal to 106°, greater than or equal to 107°, greater than or equal to 110°, greater than or equal to 111°, greater than or equal to 112°, greater than or equal to 113°, greater than or equal to 114°, greater than or equal to 115°, greater than or equal to 119°, etc. Still further, the contact angle after the abrasion may be a specific value such as 104°, 105°, 106°, 107°, 110°, 111°, 112°, 113°, 114°, 115° and 119°, or in a range with any two of the above specific values as the endpoints.

In some specific embodiments, the hydrophobic anti-reflective coating layer 2 has a porosity which may be greater than or equal to 40%.

In some specific embodiments, the hydrophobic anti-reflective coating material can be obtained by mixing a first solution with a second solution, wherein with the total mass of the raw materials of the hydrophobic anti-reflective coating material being 100%, the first solution generally comprises 3%-20% of a silicate ester, 2%-10% of a phenylsilane, 0.01%-0.5% of a fluorine-containing surfactant, and a first organic solvent; and the second solution comprises 0.5%-5% of a catalyst and a second organic solvent, the sum of the mass percentages of the first organic solvent and the second organic solvent in the raw materials of the hydrophobic anti-reflective coating material is 65%-90%. By controlling the addition amounts of a fluorine-containing surfactant and a phenylsilane in the coating, on the basis of obtaining a single hydrophobic anti-reflective coating layer having both a good hydrophobic effect and a good anti-reflection effect, the single hydrophobic anti-reflective coating layer can have abrasion resistance meeting the use requirements of automotive glass. Preferably, the sum of the mass percentages of the phenylsilane and the fluorine-containing surfactant in the raw materials of the hydrophobic anti-reflective coating material is 3%-9%.

In some specific embodiments, the sum of the mass percentages of the silicate ester and the phenylsilane in the raw materials of the hydrophobic anti-reflective coating material is generally controlled to be 5%-15%. Controlling the addition amounts of the silicate ester and the phenylsilane within the ranges above is beneficial for the storage of the coating and obtaining a coating layer with a better refractive index.

In some specific embodiments, the silicate ester can comprise one of or a combination of two or more of methyl orthosilicate, ethyl orthosilicate, propyl orthosilicate, and butyl orthosilicate.

In the present invention, since the phenylsilane has a molecular chain containing one or more phenyl groups that are hydrophobic, the introduction of the phenylsilane into the coating enables the coating layer formed thereby to have significantly improved hydrophobicity. Specifically, the phenylsilane may be a phenylsiloxane. Compared with other types of molecular chain, the siloxane molecular chain serving as a carrier for phenyl groups is more suitable for hybridization with a silicate ester in a glass substrate, and the phenylsiloxane can improve the binding force between a coating layer and glass. Further, the selection and use of a phenylsilane having a methoxy or ethoxy group is conducive to the occurrence of the spring-back phenomenon and facilitating the preparation of a coating layer having a low refractive index; moreover, the phenylsilane will inhibit the shrinkage of a coating film during the drying process and increase the porosity, thereby reducing the refractive index. In some specific embodiments, the phenylsilane comprises one of or a combination of two or more of phenyltrimethoxysilane, phenyltriethoxysilane, methylphenyldimethoxysilane, diphenyldimethoxysilane, and methylphenyldiethoxysilane.

In the present invention, the addition of a fluorine-containing surfactant can not only improve the leveling property of the coating layer formed by the coating and increase the leveling speed, but also can reduce the surface energy and further improve the hydrophobicity of the coating layer without affecting the abrasion resistance of the coating layer. In some specific embodiments, the fluorine-containing surfactant comprises a nonionic fluorocarbon surfactant, a perfluorooctyl polyether surfactant, or a combination of a nonionic fluorocarbon surfactant and a perfluorooctyl polyether surfactant.

In some specific embodiments, the solid content of the nonionic fluorocarbon surfactant may be greater than or equal to 50%, for example 55%, 60%, 65%, 70%, 75%, 80%, etc.

In some specific embodiments, the perfluorooctyl polyether surfactant preferably has a water solubility of greater than or equal to 90%, such that the fluorine-containing surfactant can be better dispersed in the solvent system of the hydrophobic anti-reflective coating material.

In some specific embodiments, the first organic solvent and/or the second organic solvent comprise one of or a combination of two or more of methanol, ethanol, propanol, butanol and isopropanol.

According to the specific embodiments of the present invention, controlling the amount of the fluorine-containing surfactant within an appropriate range can avoid adverse effects on the refractive index of the coating layer while improving the leveling property and hydrophobicity of the coating layer. In some specific embodiments, the mass percentage of the fluorine-containing surfactant in the raw materials of the hydrophobic anti-reflective coating material is generally controlled to be 0.01%-0.5%. In some specific embodiments, the fluorine-containing surfactant may be one of or a combination of two or more of GS-823 (Zicheng International Trade Co., Ltd.), WE-D9053R (produced by Xoanons Chemical Co., Ltd.), WE-D8950BR (produced by Xoanons Chemical Co., Ltd.), FCN-18 (Hangzhou Renshan Technology Co., Ltd.), etc.

In some specific embodiments, the catalyst comprises an alkaline catalyst or an acidic catalyst, wherein the alkaline catalyst may comprise one of or a combination of two or more of sodium hydroxide, potassium hydroxide, aqueous ammonia and sodium bicarbonate, and the acidic catalyst may comprise one of or a combination of two or more of hydrochloric acid, nitric acid and acetic acid.

The present invention further provides a fabrication method for the above hydrophobic anti-reflective glass for a vehicle, the fabrication method comprising: with the total mass of the raw materials of a hydrophobic anti-reflective coating material being 100%, mixing and stirring 3%-20% of a silicate ester, 2%-10% of a phenylsilane, 0.01%-0.5% of a fluorine-containing surfactant and a first organic solvent to obtain a first solution, and mixing and stirring 0.5%-5% of a catalyst and a second organic solvent to obtain a second solution, the sum of the mass percentage of the first organic solvent in the raw materials of the hydrophobic anti-reflective coating material and the mass percentage of the second organic solvent in the raw materials of the hydrophobic anti-reflective coating material being 65%-90%; mixing and stirring the second solution and the first solution to obtain the hydrophobic anti-reflective coating material; and applying the hydrophobic anti-reflective coating material onto the surface of one side of a first glass plate and curing same to form a hydrophobic anti-reflective coating layer on the surface, so as to obtain the hydrophobic anti-reflective glass for a vehicle. A sol-gel process is utilized in the above fabrication method, and a coating layer with higher hydrophobicity is formed by means of adding a phenylsilane and a silicate ester and subjecting same to a hydrolytic polycondensation reaction.

In the present invention, when the first glass plate is a first curved glass plate, the above fabrication method generally comprises applying the hydrophobic anti-reflective coating material onto the first convex surface or the first concave surface of the first curved glass plate, and curing same to form a hydrophobic anti-reflective coating layer on the first convex surface or the first concave surface, so as to obtain the hydrophobic anti-reflective glass for a vehicle.

In the present invention, by adding the second solution containing a catalyst to the first solution containing a silicate ester, the occurrence of precipitation due to the rapid hydrolytic polycondensation of the silicate ester caused by an excessively high local concentration can be effectively avoided. In some specific embodiments, the mixing and stirring the second solution and the first solution comprises: dropwise adding the second solution to the first solution under stirring, with the addition speed generally being controlled to be 30-120 drops/min, preferably 50-80 drops/min.

In some specific embodiments, the process for the coating comprises ultrasonic spraying.

In the present invention, by controlling the parameters of the spraying process, a coating layer with a nano-scale thickness can be prepared more accurately, such that glass suitable for different curved shapes can be obtained, and great flexibility is achieved during the preparation of convex coating layers or concave coating layers. In some specific embodiments, during the ultrasonic spraying, the ultrasonic frequency is 50 kHz-120 kHz, the liquid discharging amount during the spraying is 0.5 mL/min-10 mL/min, and the moving speed during the spraying is 300 mm/s-800 mm/s.

In some specific embodiments, the curing may comprise first curing at a temperature of 50°C-100°C and second curing at a temperature of 150°C-200°C in sequence.

In some specific embodiments, the first curing can be performed by using an infrared lamp. The method of infrared curing can maximally maintain the porous structure of the coating layer, and also can achieve the effect of rapid drying of the surface of the coating layer while ensuring that the coating layer has sufficient porosity.

In some specific embodiments, the time for the first curing may be controlled to be 10 min-50 min, for example, 10 min-30 min.

In some specific embodiments, the second curing can be performed by using an air blast drying oven.

In some specific embodiments, the time for the second curing may be controlled to be 30 min-120 min, for example, 30 min-90 min.

The present invention further provides a hydrophobic anti-reflective laminated glass for a vehicle. The laminated glass comprises the hydrophobic anti-reflective glass for a vehicle mentioned above, a second glass plate and a thermoplastic intermediate layer, wherein the thermoplastic intermediate layer is provided between the first glass plate and the second glass plate, the hydrophobic anti-reflective laminated glass for a vehicle has an outer surface and an inner surface, and the hydrophobic anti-reflective coating layer is provided on the outer surface or inner surface of the laminated glass.

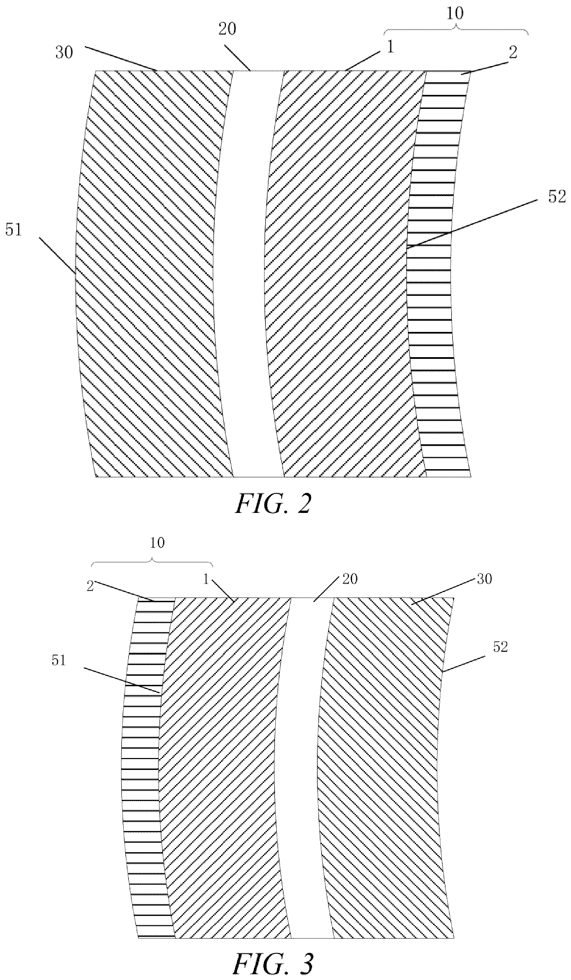

As shown in Figs. 2 and 3, the hydrophobic anti-reflective laminated glass for a vehicle of the present invention may specifically comprise a hydrophobic anti-reflective glass 10 for a vehicle, a second curved glass plate 30, and a thermoplastic intermediate layer 20, wherein the thermoplastic intermediate layer 20 is provided between the first curved glass plate 1 of the hydrophobic anti-reflective glass 10 for a vehicle and the second curved glass plate 30, the hydrophobic anti-reflective laminated glass for a vehicle has an outer surface 51 and an inner surface 52, the first convex surface 11 of the first curved glass plate is the outer surface 51 of the laminated glass or the first concave surface 12 of the first curved glass plate is the inner surface 52 of the laminated glass, and a hydrophobic anti-reflective coating layer 2 is provided on the outer surface 51 or the inner surface 52 of the laminated glass.

The second curved glass plate 30 has a second convex surface and a second concave surface.

In Fig. 2, the first curved glass plate 1 serves as the inner glass plate of the laminated glass, the second curved glass plate 30 serves as the outer glass plate of the laminated glass, the second convex surface of the second curved glass plate 30 is the outer surface 51 of the laminated glass, the first concave surface of the first curved glass plate 1 is the inner surface 52 of the laminated glass, and the hydrophobic anti-reflective coating layer 2 is provided on the inner surface 52 of the laminated glass.

In Fig. 3, the first curved glass plate 1 serves as an outer glass plate of the laminated glass, the second curved glass plate 30 serves as an inner glass plate of the laminated glass, the second concave surface of the second curved glass plate 30 is the inner surface 52 of the laminated glass, the first convex surface of the first curved glass plate 1 is the outer surface 51 of the laminated glass, and the hydrophobic anti-reflective coating layer 2 is provided on the outer surface 51 of the laminated glass.

In the following examples and comparative examples, the silicate ester used is ethyl orthosilicate, the phenylsilane used is phenyltriethoxysilane, the fluorine-containing surfactant used is GS-823 (produced by Zicheng International Trade Co., Ltd., a nonionic fluorocarbon surfactant), anhydrous ethanol is used as both the first organic solvent and the second organic solvent, the catalyst used is aqueous ammonia, and the curved glass plate used is an ordinary glass plate that has been subjected to a high-temperature heat treatment at 560°C or more and a bending and forming process, the TL of the ordinary glass plate being 90%.

In the following examples and comparative examples, the first curing is performed at a temperature of 50-100°C by using an infrared lamp; and the second curing is performed at a temperature of 150-200°C by using an air blast drying oven.

### Example 1

This example provides a hydrophobic anti-reflective glass for a vehicle, which was prepared by a method comprising:
1. with the total mass of the raw materials of a hydrophobic anti-reflective coating material being 100%, mixing and stirring 8% of a silicate ester, 3% of a phenylsilane, 0.03% of a fluorine-containing surfactant and 46.00% of a first organic solvent to obtain a first solution, and mixing and stirring 2% of a catalyst and 40.97% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 2

This example provides a hydrophobic anti-reflective glass for a vehicle, which was prepared by a method comprising:
1. with the total mass of the raw materials of a hydrophobic anti-reflective coating material being 100%, mixing and stirring 8% of a silicate ester, 3% of a phenylsilane, 0.13% of a fluorine-containing surfactant and 46.00% of a first organic solvent to obtain a first solution, and mixing and stirring 2% of a catalyst and 40.87% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 3

This example provides a hydrophobic anti-reflective glass for a vehicle, which was prepared by a method comprising:
1. with the total mass of the raw materials of a hydrophobic anti-reflective coating material being 100%, mixing and stirring 8% of a silicate ester, 3% of a phenylsilane, 0.40% of a fluorine-containing surfactant and 46.00% of a first organic solvent to obtain a first solution, and mixing and stirring 2% of a catalyst and 40.60% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 4

This example provides a hydrophobic anti-reflective glass for a vehicle, which was prepared by a method comprising:
1. with the total mass of the raw materials of a hydrophobic anti-reflective coating material being 100%, mixing and stirring 6% of a silicate ester, 5.60% of a phenylsilane, 0.03% of a fluorine-containing surfactant and 46.00% of a first organic solvent to obtain a first solution, and mixing and stirring 2% of a catalyst and 40.37% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 5

This example provides a hydrophobic anti-reflective glass for a vehicle, which was prepared by a method comprising:
1. with the total mass of the raw materials of a hydrophobic anti-reflective coating material being 100%, mixing and stirring 6% of a silicate ester, 5.60% of a phenylsilane, 0.13% of a fluorine-containing surfactant and 46.00% of a first organic solvent to obtain a first solution, and mixing and stirring 2% of a catalyst and 40.27% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 6

This example provides a hydrophobic anti-reflective glass for a vehicle, which was prepared by a method comprising:
1. with the total mass of the raw materials of a hydrophobic anti-reflective coating material being 100%, mixing and stirring 6% of a silicate ester, 5.60% of a phenylsilane, 0.40% of a fluorine-containing surfactant and 46.00% of a first organic solvent to obtain a first solution, and mixing and stirring 2% of a catalyst and 40.00% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 7

This example provides a hydrophobic anti-reflective glass for a vehicle, which was prepared by a method comprising:
1. with the total mass of the raw materials of a hydrophobic anti-reflective coating material being 100%, mixing and stirring 4% of a silicate ester, 8% of a phenylsilane, 0.03% of a fluorine-containing surfactant and 46.00% of a first organic solvent to obtain a first solution, and mixing and stirring 2% of a catalyst and 39.97% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 8

This example provides a hydrophobic anti-reflective glass for a vehicle, which was prepared by a method comprising:
1. with the total mass of the raw materials of a hydrophobic anti-reflective coating material being 100%, mixing and stirring 4% of a silicate ester, 8% of a phenylsilane, 0.13% of a fluorine-containing surfactant and 46.00% of a first organic solvent to obtain a first solution, and mixing and stirring 2% of a catalyst and 39.70% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 9

This example provides a hydrophobic anti-reflective glass for a vehicle, which was prepared by a method comprising:
1. with the total mass of the raw materials of a hydrophobic anti-reflective coating material being 100%, mixing and stirring 4% of a silicate ester, 8% of a phenylsilane, 0.40% of a fluorine-containing surfactant and 46.00% of a first organic solvent to obtain a first solution, and mixing and stirring 2% of a catalyst and 41.60% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 10

This example provides a hydrophobic anti-reflective glass for a vehicle, which was prepared by a method comprising:
1. with the total mass of the raw materials of a hydrophobic anti-reflective coating material being 100%, mixing and stirring 10% of a silicate ester, 3% of a phenylsilane, 0.13% of a fluorine-containing surfactant and 46.00% of a first organic solvent to obtain a first solution, and mixing and stirring 2% of a catalyst and 38.87% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Example 11

This example provides a hydrophobic anti-reflective glass for a vehicle, which was prepared by a method comprising:
1. with the total mass of the raw materials of a hydrophobic anti-reflective coating material being 100%, mixing and stirring 12% of a silicate ester, 3% of a phenylsilane, 0.13% of a fluorine-containing surfactant and 46.00% of a first organic solvent to obtain a first solution, and mixing and stirring 2% of a catalyst and 36.87% of a second organic solvent to obtain a second solution;
2. dropwise adding the second solution to the first solution under stirring at a speed of 30-120 drops/min to obtain the hydrophobic anti-reflective coating material; and
3. applying the hydrophobic anti-reflective coating material onto a first concave surface of a first curved glass plate, followed by first curing and second curing in sequence to form a hydrophobic anti-reflective coating layer, so as to obtain the hydrophobic anti-reflective glass for a vehicle.

### Comparative example 1

This comparative example provides a glass with a coating layer, the coating layer of the glass was prepared without adding a fluorine-containing surfactant as compared to the glass prepared in examples 1-6. Specifically, the glass in this comparative example was prepared by a method comprising:
1. with the total mass of the raw materials of a coating being 100%, mixing and stirring 10% of a silicate ester, 1% of a phenylsilane and 43.50% of a first organic solvent to obtain a first solution, and mixing and stirring 2% of a catalyst and 43.50% of a second organic solvent to obtain a second solution;
2. dropwise adding the second solution to the first solution under stirring at a speed of 30-120 drops/min to obtain the coating; and
3. coating the coating prepared in step 2 onto a first concave surface of a first curved glass plate, followed by first curing and second curing in sequence to form a coating layer, so as to obtain the glass with a coating layer.

### Comparative example 2

This comparative example provides a glass with a coating layer, the coating layer of the glass was prepared with the addition amount of a phenylsilane being less than 1% as compared to the glass prepared in examples 1-6. Specifically, the glass in this comparative example was prepared by a method comprising:
1. with the total mass of the raw materials of a coating being 100%, mixing and stirring 10% of a silicate ester, 0.7% of a phenylsilane, 0.03% of a fluorine-containing surfactant and 43.50% of a first organic solvent to obtain a first solution, and mixing and stirring 2% of a catalyst and 43.77% of a second organic solvent to obtain a second solution;
2. dropwise adding the second solution to the first solution under stirring at a speed of 30-120 drops/min to obtain the coating; and
3. coating the coating prepared in step 2 onto a first concave surface of a first curved glass plate, followed by first curing and second curing in sequence to form a coating layer, so as to obtain the glass with a coating layer.

### Test example 1

The glass with a coating layer obtained in comparative examples 1 and 2 and the hydrophobic anti-reflective glass for a vehicle obtained in examples 1 to 9 were respectively subjected to tests for the thickness of the coating layer, water contact angle, refractive index, porosity, visible-light transmittance (central wavelength: 550 nm) and abrasion resistance, and the test results were recorded in Table 1.

Thickness of coating layer: the thickness of a coating layer was measured by using a step profiler.

Water contact angle: the coating layer on the surface of glass was measured with a contact angle meter.

Refractive index: the refractive index of a film layer was measured using an ellipsometer.

Porosity: the porosity of a film layer was calculated according to the measured refractive index.

Visible-light transmittance: the transmission spectra of the samples in the visible wavelength range of 380-780 nm were measured using a spectrophotometer, and the visible-light transmittance of a coating layer at the central wavelength of 550 nm was obtained.

Abrasion resistance: the abrasion resistance was tested by using a flat abrasion tester, wherein a glass sample was placed on the instrument with the coating layer thereof upwards, and then subjected to a flat abrasion test at 100 revolutions according to 2.45 N × 100 r; and the contact angle after the abrasion was measured. Herein, the contact angle was the water contact angle of a hydrophobic anti-reflective coating layer.

**Table 1**

| | Thickness of coating layer | Water contact angle | Refractive index | Poro sity | Visible-light transmittance | Abrasion resistance |
|---|---|---|---|---|---|---|
| Comparative example 1 | 100 nm | 45° | 1.22 | 56% | 99.91% | 39° |
| Comparative example 2 | 100 nm | 51° | 1.22 | 55% | 99.92% | 40° |
| Example 1 | 100 nm | 110° | 1.23 | 54% | 99.97% | 107° |
| Example 2 | 100 nm | 114° | 1.23 | 54% | 99.95% | 107° |
| Example 3 | 100 nm | 119° | 1.24 | 52% | 99.91% | 112° |
| Example 4 | 100 nm | 114° | 1.24 | 53% | 99.92% | 106° |
| Example 5 | 100 nm | 116° | 1.25 | 51% | 99.88% | 111° |
| Example 6 | 100 nm | 120° | 1.26 | 47% | 99.85% | 115° |
| Example 7 | 100 nm | 115° | 1.25 | 50% | 99.88% | 113° |
| Example 8 | 100 nm | 118° | 1.26 | 47% | 99.86% | 114° |
| Example 9 | 100 nm | 123° | 1.28 | 43% | 98.68% | 119° |
| Example 10 | 100 nm | 113° | 1.23 | 54% | 99.97% | 105° |
| Example 11 | 100 nm | 111° | 1.23 | 54% | 99.98% | 104° |

In Table 1, the hydrophobic anti-reflective coating layers of examples 1 to 11 have a refractive index of 1.23-1.28 and a porosity in a range of 40%-60%, specifically 43%-54%. A flat abrasion test at 100 revolutions according to 2.45 N × 100 r was performed using a flat abrasion tester on the hydrophobic anti-reflective glass for a vehicle with the hydrophobic anti-reflective coating layer thereof upwards, the contact angle after the abrasion was measured to be greater than or equal to 100°, even greater than or equal to 105°, and further greater than or equal to 110°.

As can be seen from the results in Table 1:
1. controlling the total addition amount of a phenylsilane and a fluorine-containing surfactant within a reasonable range (3%-9%) enables the obtained coating layer to have an excellent hydrophobic effect, anti-reflection effect, and abrasion resistance;
2. adjusting the addition amount of a phenylsilane in a coating has a significant effect on the porosity of a coating layer; specifically, with an increase in the addition amount of the phenylsilane, the abrasion resistance and hydrophobicity of the coating layer are significantly improved, but the refractive index of the coating layer also increased accordingly;
3. adjusting the addition amount of a fluorine-containing surfactant in a coating also affects the porosity but has no effect on the abrasion resistance; specifically, the higher the addition amount of the fluorine-containing surfactant, the larger the water contact angle of the coating layer and the glass obtained therefrom, but the porosity of the coating layer is reduced, and the refractive index thereof is increased.

## Claims

1. A hydrophobic anti-reflective glass for a vehicle, **characterized in that** the hydrophobic anti-reflective glass for a vehicle comprises a first glass plate and a hydrophobic anti-reflective coating layer, wherein the hydrophobic anti-reflective coating layer is applied on one side of the first glass plate;
the hydrophobic anti-reflective coating layer is a single-layered structure formed by curing a hydrophobic anti-reflective coating material, wherein the raw materials for the hydrophobic anti-reflective coating material comprise a silicate ester, a phenylsilane, and a fluorine-containing surfactant; and
the hydrophobic anti-reflective coating layer has a water contact angle of 110°-130° and a refractive index of 1.20-1.30.

2. The hydrophobic anti-reflective glass for a vehicle according to claim 1, **characterized in that** the hydrophobic anti-reflective coating layer has a thickness of 10 nm-300 nm.

3. The hydrophobic anti-reflective glass for a vehicle according to claim 1, **characterized in that** the hydrophobic anti-reflective coating layer has a thickness of 50 nm-250 nm, and a refractive index of 1.21-1.25.

4. The hydrophobic anti-reflective glass for a vehicle according to claim 1, **characterized in that** the hydrophobic anti-reflective coating layer has a refractive index of 1.23-1.28.

5. The hydrophobic anti-reflective glass for a vehicle according to claim 1, **characterized in that** the hydrophobic anti-reflective coating layer has a porosity of greater than or equal to 40%.

6. The hydrophobic anti-reflective glass for a vehicle according to claim 1, **characterized in that** the hydrophobic anti-reflective coating material is obtained by mixing a first solution with a second solution, wherein the first solution comprises 3%-20% of a silicate ester, 2%-10% of a phenylsilane, 0.01%-0.5% of a fluorine-containing surfactant and a first organic solvent, and the second solution comprises 0.5%-5% of a catalyst and a second organic solvent, based on 100% of the total mass of the raw materials for the hydrophobic anti-reflective coating material.

7. The hydrophobic anti-reflective glass for a vehicle according to claim 6, **characterized in that** the sum of the mass percentages of the first organic solvent and the second organic solvent in the raw materials for the hydrophobic anti-reflective coating material is 65%-90%.

8. The hydrophobic anti-reflective glass for a vehicle according to any one of claims 1-6, **characterized in that** the sum of the mass percentages of the fluorine-containing surfactant and the phenylsilane in the raw materials for the hydrophobic anti-reflective coating material is 3%-9%.

9. The hydrophobic anti-reflective glass for a vehicle according to any one of claims 1-6, **characterized in that** the sum of the mass percentages of the silicate ester and the phenylsilane in the raw materials for the hydrophobic anti-reflective coating material is 5%-15%.

10. The hydrophobic anti-reflective glass for a vehicle according to any one of claims 1-6, **characterized in that** the silicate ester comprises one of or a combination of two or more of methyl orthosilicate, ethyl orthosilicate, propyl orthosilicate, and butyl orthosilicate.

11. The hydrophobic anti-reflective glass for a vehicle according to any one of claims 1-6, **characterized in that** the phenylsilane comprises one of or a combination of two or more of phenyltrimethoxysilane, phenyltriethoxysilane, methylphenyldimethoxysilane, diphenyldimethoxysilane, and methylphenyldiethoxysilane.

12. The hydrophobic anti-reflective glass for a vehicle according to any one of claims 1-6, **characterized in that** the fluorine-containing surfactant comprises a nonionic fluorocarbon surfactant, which has a solid content of greater than or equal to 50%.

13. The hydrophobic anti-reflective glass for a vehicle according to any one of claims 1-6, **characterized in that** the fluorine-containing surfactant comprises a perfluorooctyl polyether surfactant, which has a water solubility of greater than or equal to 90%.

14. The hydrophobic anti-reflective glass for a vehicle according to claim 6, **characterized in that** the first organic solvent and/or the second organic solvent comprises one of or a combination of two or more of methanol, ethanol, propanol, butanol and isopropanol; and the catalyst comprises an alkaline catalyst or an acidic catalyst, wherein the alkaline catalyst preferably comprises one of or a combination of two or more of sodium hydroxide, potassium hydroxide, aqueous ammonia and sodium bicarbonate, and the acidic catalyst preferably comprises one of or a combination of two or more of hydrochloric acid, nitric acid and acetic acid.

15. A method for manufacturing a hydrophobic anti-reflective glass for a vehicle according to any one of claims 1-14, **characterized in that** the method comprises the steps of
based on 100% of the total mass of the raw materials for the hydrophobic anti-reflective coating material, mixing 3%-20% of a silicate ester, 2%-10% of a phenylsilane, 0.01%-0.5% of a fluorine-containing surfactant and a first organic solvent and stirring them to obtain a first solution, and mixing 0.5%-5% of a catalyst and a second organic solvent and stirring them to obtain a second solution;
mixing and stirring the second solution and the first solution to obtain the hydrophobic anti-reflective coating material; and
applying the hydrophobic anti-reflective coating material onto one side of a first glass plate, followed by curing, to form a hydrophobic anti-reflective coating layer on the side, so as to obtain the hydrophobic anti-reflective glass for a vehicle.

16. The method according to claim 15, **characterized in that** the mixing and stirring the second solution and the first solution comprises the step of
dropwise adding the second solution to the first solution under stirring at a speed of 30-120 drops/min.

17. The method according to claim 15, **characterized in that** the applying comprises ultrasonic spraying; and during the ultrasonic spraying, the ultrasonic frequency is 50 kHz-120 kHz, the liquid discharging amount during the spraying is 0.5 mL/min-10 mL/min, and the moving speed during the spraying is 300 mm/s-800 mm/s.

18. The method according to claim 15, **characterized in that** the curing comprises a first curing at a temperature of 50°C-100°C and a second curing at a temperature of 150°C-200°C in sequence.

19. The method according to claim 18, **characterized in that** the first curing is performed by using an infrared lamp, for preferably 10-50 min, and the second curing is performed by using an air blast drying oven, for preferably 30-120 min.

20. A hydrophobic anti-reflective laminated glass for a vehicle, **characterized in that** the laminated glass comprises a hydrophobic anti-reflective glass for a vehicle according to any one of claims 1-14, a second glass plate, and a thermoplastic intermediate layer, wherein the thermoplastic intermediate layer is provided between the first glass plate and the second glass plate, the hydrophobic anti-reflective laminated glass for a vehicle has an outer surface and an inner surface, and the hydrophobic anti-reflective coating layer is provided on the outer surface or inner surface of the laminated glass.
